# FASCICULE DE BREVET EUROPEEN

(11) **EP 3 351 149 B1**
(45) Date de publication et mention de la délivrance du brevet: **18.08.2021**
(21) Numéro de dépôt: 18153090.8
(22) Date de dépôt: 23.01.2018
(51) Int. Cl.: A47J 27/18, B67D 3/00, A21C 15/00

(54) **FONTAINE À CONFITURE**
MARMELADEN-FONTÄNE
JAM FOUNTAIN

(30) Priorité: 23.01.2017 FR 1750529
(43) Date de publication de la demande: 25.07.2018
(73) Titulaire: Confiturerie Francis Miot, 64110 Uzos (FR)
(72) Inventeur: OTHAX, Jean, 64110 UZOS (FR)
(74) Mandataire: Plasseraud IP

(56) Documents cités:
- DE-A1- 4 410 853
- FR-A1- 2 505 163
- US-A- 2 915 024

## Description

### ARRIERE-PLAN DE L'INVENTION

### Domaine de l'invention

La présente invention concerne un dispositif de distribution de produit alimentaire, et plus particulièrement une fontaine pour distribuer un produit alimentaire visqueux ou pâteux à base de sucre.

La présente invention trouve notamment application pour délivrer de la confiture, de la gelée ou encore de la marmelade.

### Arrière-plan technologique

On connaît des fontaines pour exposer ou servir du chocolat liquide, lesquelles présentent un pouvoir attractif et festif, notamment en ce qu'une vis sans fin déplace du chocolat fondu de la base de la fontaine vers sa partie supérieure, ce chocolat retombant ensuite en cascade.

On connaît également des fontaines pour servir d'autres liquides visqueux consommables, tels que du fromage. Les documents US 2 915 024 A, FR 2 505 163 A1, DE 44 10 853 A1 divulguent des appareils de cuisson a bain-marie pour des aliments.

Néanmoins, la demanderesse ne connaît pas de fontaine à confiture, notamment pour proposer des confitures de fruits de saison, fraîches et/ou créatives.

Les fontaines de l'état de l'art ne sont d'ailleurs pas adaptées pour distribuer de la confiture.

On observe, en effet, qu'une chauffe prolongée d'une confiture entraîne des modifications organoleptiques (couleur, odeur, saveur) de celle-ci.

A titre purement illustratif, on constate sur une confiture réalisée à partir de fruits jaunes, un changement de couleur, notamment un brunissement, ainsi qu'une altération gustative de cette confiture.

Bien entendu, de telles modifications empêchent toute commercialisation du produit alimentaire, avec l'impact financier en découlant pour l'exploitant.

### Objet de l'invention

La présente invention vise donc à pallier les inconvénients de l'art antérieur en proposant une fontaine pour produit alimentaire visqueux ou pâteux à base de sucre, simple dans sa conception et dans son mode opératoire, fiable et économique, permettant de délivrer aisément ce produit alimentaire sans altération visuelle, ni gustative de celui-ci.

Un autre objet de la présente invention est une telle fontaine assurant une délivrance optimale de son contenu et limitant ainsi, voire éliminant, la possibilité que du produit alimentaire soit perdu par retenu de ce dernier sur des parois internes de la fontaine.

La présente invention vise encore l'utilisation d'une telle fontaine pour délivrer de la confiture, de la gelée ou encore de la marmelade.

### BREVE DESCRIPTION DE L'INVENTION

A cet effet, l'invention concerne une fontaine pour produit alimentaire visqueux ou pâteux à base de sucre tel que de la confiture ou de la marmelade.

Selon l'invention, cette fontaine comprend :
- un réservoir comportant une paroi, et une cuve intérieure placée dans ledit réservoir, ladite paroi entourant ladite cuve intérieure en délimitant avec la surface externe de ladite cuve intérieure, un volume intercalaire, ladite cuve intérieure étant destinée à contenir ledit produit alimentaire,
- ledit volume intercalaire étant destiné à recevoir un liquide pour baigner au moins en partie, la surface externe de ladite cuve intérieure,
- un moyen de chauffage pour chauffer ledit liquide destiné à être contenu dans ledit volume intercalaire, ledit liquide ainsi chauffé permettant de chauffer le contenu de ladite cuve intérieure par bain-marie,
- la partie inférieure dudit réservoir comportant un orifice de sortie en communication de fluide avec le seul volume intérieur de ladite cuve intérieure,
- ladite cuve intérieure est une colonne dont le diamètre est inférieur ou égal à 12 cm, et encore mieux à 10 cm, de sorte que la température du produit alimentaire dans une zone centrale de ladite cuve intérieure et la température du produit alimentaire au niveau d'une zone périphérique de ladite cuve intérieure sont sensiblement égales, et
- ladite fontaine étant configurée de sorte que la température du produit alimentaire dans la cuve intérieure, lorsque la fontaine est en fonctionnement, est inférieure à 40°C, et encore mieux à 35°C pour limiter la réaction de Maillard dans ledit produit alimentaire.

De préférence, ce produit alimentaire visqueux ou pâteux est réalisé à base de sucre, et peut comporter, par exemple, une teneur en sucre d'au moins 40%, et encore mieux au moins égale à 50%. A titre purement illustratif, il peut s'agir d'une confiture, d'une gelée ou marmelade.

Il pourrait encore s'agir d'une crème de marron ou de pruneaux.

De manière avantageuse, cette chauffe très douce du contenu de la cuve intérieure permet de garantir que le produit alimentaire visqueux ou pâteux n'est pas altéré.

On observe ainsi qu'une confiture, conserve avantageusement sa couleur initiale dans le temps, et ne prend en conséquence pas de teinte brunâtre susceptible de déplaire au consommateur. Ses qualités gustatives ne sont pas altérées non plus.

Le produit alimentaire visqueux ou pâteux ainsi chauffé peut avantageusement être transféré directement dans un contenant tel qu'un pot, ou déposé sur un support consommable tel qu'une tartine ou une crêpe.

De préférence, la confiture est tiède lorsqu'elle sort par l'orifice de sortie de la fontaine.

Cette fontaine se présentant extérieurement sous la forme d'une colonne réalisée en cuivre étamé, elle possède également un aspect esthétique fort pour son exhibition en magasin.

Dans différents modes de réalisation particuliers de cette fontaine, chacun ayant ses avantages particuliers et susceptibles de nombreuses combinaisons techniques possibles:
- s'agissant d'une fontaine, elle comporte avantageusement un pied ou un support permettant de poser en équilibre celle-ci sur une base telle qu'une table. Alternativement, cette fontaine peut être configurée pour être suspendue.
- cet orifice de sortie est placé sur le côté du réservoir.
   De préférence, s'agissant d'une fontaine, cet orifice de sortie appartient à un robinet ou une buse de distribution en communication de fluide avec le seul volume intérieur de ladite cuve pour permettre l'extraction de son contenu.
- ladite fontaine comporte des moyens pour contrôler la température du bain-marie de sorte que la température du contenu de ladite cuve intérieure est comprise entre 20°C et 35°C, lorsque ladite fontaine est en fonctionnement.
   A titre purement illustratif, ces moyens peuvent comporter une ou plusieurs sondes pour mesurer la température du bain-marie et/ou du contenu de ladite cuve intérieure, laquelle ou lesquelles sont reliées à une unité de commande de chauffage contrôlant ledit moyen de chauffage permettant de chauffer le liquide contenu dans ledit volume intercalaire et qui joue le rôle de bain-marie.
- la paroi dudit réservoir est une paroi cylindrique définissant une colonne.
   De préférence, la cuve intérieure est également allongée et forme par exemple une colonne.
- la partie inférieure de la fontaine comporte une base assurant un support stable de la fontaine sur une surface plane, telle que celle définie par la surface externe d'une table.
- la partie inférieure de ladite cuve intérieure forme un coude pointant vers le bas, lequel permet de guider le contenu de ladite cuve intérieure vers ledit orifice de sortie.
   De manière avantageuse, ledit orifice de sortie étant placé sur le côté du réservoir, la partie inférieure de ladite cuve intérieure forme un coude pointant vers le bas et dirigé vers ledit orifice de sortie pour guider l'ensemble du contenu de ladite cuve intérieure vers ledit orifice de sortie.
   De préférence, cette partie inférieure présente une paroi lisse et continue, c'est-à-dire sans arrête, pour assurer un écoulement facilitée du produit alimentaire vers l'orifice de sortie de la fontaine et éviter que du produit alimentaire ne soit retenu et perdu au niveau d'une ou plusieurs arrêtes.
   Par exemple, cette partie inférieure comprend un biseau tronqué pointant vers le bas, lequel est relié à l'orifice de sortie.
   De manière avantageuse, l'extrémité inférieure de la cuve intérieure est placée à distance du fond du réservoir de sorte que le contenu de la cuve intérieure se déplace par gravité vers l'orifice de sortie. Ainsi, l'extrémité inférieure de la cuve intérieure est par exemple placée au-dessus de cet orifice de sortie.
- la cuve intérieure comporte un moyen pour mélanger le contenu de celle-ci. Par exemple, il peut s'agir d'une vrille ayant un filet en spirale, ladite vrille étant entraînée en rotation dans la cuve intérieure.
- l'extrémité supérieure du réservoir comporte un couvercle ou un bouchon permettant d'obturer un orifice de remplissage de la cuve intérieure pour son remplissage en produit alimentaire visqueux ou pâteux.
   On cherche à garantir une température uniforme ou sensiblement uniforme du produit alimentaire à l'intérieur de la cuve intérieure.
- une buse de distribution est reliée audit orifice de sortie en étant en communication de fluide avec cet orifice, ladite buse étant munie d'un clapet mobile entre une position d'ouverture et une position de fermeture, ledit clapet étant actionnable par un organe de commande d'ouverture dudit clapet.
- le réservoir comporte dans sa partie supérieure un port d'entrée et dans sa partie inférieure un port de sortie, lesquels sont en communication de fluide avec le seul volume intercalaire en étant reliés à un circuit de transport en liquide extérieur à ladite fontaine.
   A titre d'exemple, ce liquide est de l'eau purifiée ou de l'eau déminéralisée.
   La fontaine peut être configurée de sorte que le liquide circule en circuit fermé. Elle peut ainsi contenir une pompe pour déplacer le liquide dans la partie haute de la fontaine.
- ledit moyen de chauffage est alimenté par un circuit d'alimentation en courant électrique.
   Par exemple, ce moyen de chauffage peut être une résistance électrique. Alternativement, la fontaine peut comporter une ou plusieurs batteries pour alimenter en énergie au moins les moyens de chauffage. Cette ou ces batteries peuvent être rechargeables.
- la surface intérieure de la paroi dudit réservoir destinée à être en contact avec ledit liquide, est revêtue d'au moins une couche en matière thermiquement isolante.
   Avantageusement, un consommateur se servant de la fontaine, ne risquera pas ainsi de se brûler.
- au moins ladite cuve intérieure est réalisée en cuivre étamé, en aluminium ou encore en acier inoxydable.
   De préférence, le réservoir est également réalisé en cuivre étamé ou en aluminium.

La présente invention concerne également l'utilisation de ladite fontaine telle que décrite précédemment, pour le stockage et la distribution de confiture, gelée ou marmelade à une température supérieure à la température ambiante.

De manière avantageuse, on maintiendra la température de ladite confiture, gelée ou marmelade à une température inférieure à 40°C, et encore mieux à 35°C, pour limiter la réaction de Maillard dans le produit alimentaire correspondant. Par exemple, la température de ladite de confiture, gelée ou marmelade pourra être maintenue ente 20°C et 30 °C.

De manière préférentielle, on maintient une température homogène ou sensiblement homogène de ladite confiture, gelée ou marmelade dans l'ensemble de la cuve intérieure de la fontaine.

Selon l'invention, ladite cuve intérieure est une colonne dont le diamètre est inférieur ou égal à 12 cm, et encore mieux à 10 cm, de sorte que la température du produit alimentaire dans une zone centrale de ladite cuve intérieure et la température du produit alimentaire au niveau d'une zone périphérique de ladite cuve intérieure sont égales ou sensiblement égales.

On cherchera également à s'assurer que la partie inférieure de la cuve présente une forme non susceptible de retenir de ladite confiture, gelée ou marmelade afin d'assurer son entière extraction et empêcher le brunissement de produits alimentaires. Pour cela, la partie inférieure de la cuve présentera avantageusement une forme coudée pointant vers le bas et dirigée vers ledit orifice de sortie, la paroi de cette partie coudée étant lisse et arrondie, c'est-à-dire dépourvue d'arrête.

De préférence, on aura préalablement réduit la taille de chaque morceau de ladite confiture pour éviter que ceux-ci se retrouvent par gravité dans le fond de ladite cuve intérieure.

A titre purement illustratif, on pourra mixer la confiture pour réduire les morceaux en purée lisse ou motonneuse.

De manière avantageuse, lors de sa préparation, la confiture a été portée à une température d'ébullition pendant un temps T, ce temps T étant inférieur à un temps t de référence de sorte que la cuisson de ladite confiture est incomplète.

Ce temps t de référence est la durée usuellement utilisée, par exemple de 10 à 15 minutes, lors de l'ébullition d'une préparation en vue de former une confiture. Par exemple, le temps T peut être respectivement de 8 à 12 minutes.

### BREVE DESCRIPTION DES DESSINS

D'autres avantages, buts et caractéristiques particulières de la présente invention ressortiront de la description qui va suivre, faite, dans un but explicatif et nullement limitatif, en regard des dessins annexés, dans lesquels :
- la Figure 1 est une représentation schématique et en coupe d'une fontaine à confiture selon un mode de réalisation particulier de la présente invention ;
- la Figure 2 est une vue partielle et en perspective de fontaines à confiture de la Fig. 1, chacune desdites fontaines étant portée par un support ouvert, ces derniers étant placés en exhibition sur une table ;

### DESCRIPTION DETAILLEE DE MODE DE REALISATION DE L'INVENTION

Tout d'abord, on note que les figures ne sont pas à l'échelle.

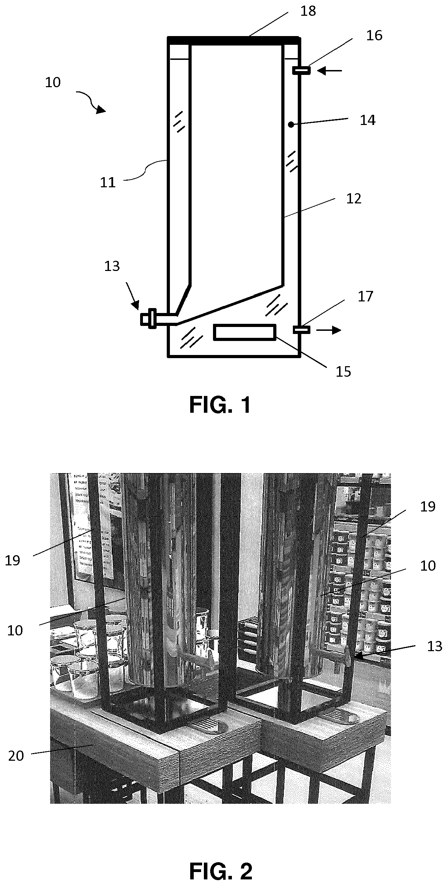

Les Figures 1 et 2 représentent schématiquement une fontaine 10 à confiture selon un mode de réalisation particulier de la présente invention.

Cette fontaine 10 qui présente une esthétique très attractive, est destinée au service d'une confiture tiède, telle qu'une confiture de fruits frais.

Elle comprend un réservoir 11 et une cuve 12 intérieure logée à l'intérieur de ce réservoir. Cette cuve 12 intérieure est destinée à contenir la confiture qui sera chauffée afin de la rendre plus fluide en vue de sa délivrance par un robinet 13 placé dans la partie inférieure du réservoir 11 et sur le côté de celui-ci.

Ce robinet 13 est relié de manière étanche et est en communication de fluide avec le seul volume intérieur de la cuve 12 intérieure de sorte que la confiture ainsi chauffée ne peut pas être contaminée lors de sa délivrance.

Ce réservoir 11 et sa cuve 12 intérieure forment ici des colonnes réalisées en cuivre étamé.

Le volume intérieur du réservoir 11 recevant la cuve 12 intérieure est délimité par une paroi déterminant l'aspect extérieur de la fontaine 10. Cette paroi entoure donc la cuve 12 intérieure en délimitant avec la surface externe de cette cuve 12 intérieure, un volume 14 intercalaire.

Ce volume 14 intercalaire contient, ici, de l'eau déminéralisée pour baigner la surface externe de la cuve 12 intérieure sur une partie de sa hauteur. Cette eau étant chauffée par une résistance 15 électrique permet de chauffer le contenu de la cuve 12 intérieure par bain-marie.

Cette eau ainsi chauffée circule en circuit fermé entre un port 16 d'entrée et un port 17 de sortie portés par la paroi du réservoir 11. Une pompe (non représentée) peut être mise en œuvre pour faire circuler l'eau entre ces deux ports 16, 17.

La fontaine 10 comporte également une ou plusieurs sondes (non représentées) pour mesurer la température du liquide jouant le rôle de bain-marie, laquelle ou lesquelles sont reliées à un thermostat électronique (non représenté) contrôlant la résistance 15 électrique.

Il est ainsi possible de déterminer la température de l'eau déminéralisée baignant la surface externe de la cuve 12 intérieure et de contrôler ainsi la température du contenu de cette cuve 12 intérieure.

Avantageusement, la température de la confiture contenue dans la cuve 12 intérieure n'excède pas 35°C, lorsque la fontaine est en fonctionnement, pour limiter la réaction de Maillard dans cette confiture. On s'assure ainsi que la confiture peut rester chaude toute une journée, voire plus longtemps, sans altération de ses qualités organoleptiques.

En outre, et afin de limiter toute retenue indésirable de la confiture dans la cuve 12 intérieure, la partie inférieure de la cuve 12 présente une forme en biseau pointant vers le bas et dirigée vers l'orifice de sortie. La confiture ainsi chauffée s'écoule par gravité au travers de l'orifice de sortie de la fontaine porté par le robinet 13.

La partie supérieure de la fontaine comporte un orifice obturé par un couvercle 18 pour permettre le nettoyage et le remplissage de la cuve 12 intérieure.

La Figure 2 est une vue partielle et en perspective de fontaines à confiture telle que décrites précédemment, le réservoir 11 de chaque fontaine 10 étant porté par un support 19 ouvert, lequel est ici un cadre rectangulaire en bois.

Afin de conférer un aspect esthétique supplémentaire le réservoir 11 qui est en cuivre étamé est placé à distance de l'extrémité du cadre 19 porté par le plan d'une table 20.

## Revendications

1. Fontaine pour produit alimentaire visqueux ou pâteux à base de sucre, **caractérisée en ce qu'**elle comprend
- un réservoir (11) comportant une paroi, et une cuve (12) intérieure placée dans ledit réservoir (11), ladite paroi entourant ladite cuve (12) intérieure en délimitant avec la surface externe de ladite cuve (12) intérieure, un volume (14) intercalaire, ladite cuve (12) intérieure étant destinée à contenir ledit produit alimentaire,
- ledit volume (14) intercalaire étant destiné à recevoir un liquide pour baigner au moins en partie, la surface externe de ladite cuve (12) intérieure,
- un moyen (15) de chauffage pour chauffer ledit liquide destiné à être contenu dans ledit volume (14) intercalaire, ledit liquide ainsi chauffé permettant de chauffer le contenu de ladite cuve (12) intérieure par bain-marie,
- la partie inférieure dudit réservoir (11) comportant un orifice de sortie en communication de fluide avec le seul volume intérieur de ladite cuve (12) intérieure, et
- ladite fontaine étant configurée de sorte que la température du produit alimentaire dans la cuve (12) intérieure, lorsque la fontaine est en fonctionnement, est inférieure à 40°C, et encore mieux à 35°C pour limiter la réaction de Maillard dans ce produit alimentaire, **caractérisée en ce que** ladite cuve (12) intérieure est une colonne dont le diamètre est inférieur ou égal à 12 cm, et encore mieux à 10 cm, de sorte que la température du produit alimentaire dans une zone centrale de ladite cuve (12) intérieure et la température du produit alimentaire au niveau d'une zone périphérique de ladite cuve (12) intérieure sont sensiblement égales.

2. Fontaine selon la revendication 1, **caractérisée en ce que** ledit orifice de sortie est placé sur le côté dudit réservoir.

3. Fontaine selon la revendication 1 ou 2, **caractérisée en ce qu'**elle comporte des moyens pour contrôler la température du bain-marie de sorte que la température du contenu de ladite cuve (12) intérieure est comprise entre 20°C et 35°C, lorsque ladite fontaine est en fonctionnement.

4. Fontaine selon l'une quelconque des revendications 1 à 3, **caractérisée en ce que** ledit orifice de sortie étant placé sur le côté du réservoir, la partie inférieure de ladite cuve (12) intérieure forme un coude pointant vers le bas et dirigé vers ledit orifice de sortie pour guider l'ensemble du contenu de ladite cuve (12) intérieure vers ledit orifice de sortie.

5. Fontaine selon la revendication 4, **caractérisée en ce que** ladite partie inférieure de la cuve intérieure présente une paroi lisse et sans arrête pour assurer un écoulement facilité du produit alimentaire vers l'orifice de sortie de la fontaine.

6. Fontaine selon l'une quelconque des revendications 1 à 5, **caractérisée en ce qu'**une buse (13) de distribution est reliée audit orifice de sortie en étant en communication de fluide avec cet orifice, ladite buse étant munie d'un clapet mobile entre une position d'ouverture et une position de fermeture, ledit clapet étant actionnable par un organe de commande d'ouverture dudit clapet.

7. Fontaine selon l'une quelconque des revendications 1 à 6, **caractérisée en ce que** ledit moyen (15) de chauffage est alimenté par un circuit d'alimentation en courant électrique.

8. Fontaine selon l'une quelconque des revendications 1 à 7, **caractérisée en ce que** la surface intérieure de la paroi dudit réservoir (11) destinée à être en contact avec ledit liquide, est revêtue d'au moins une couche en matière thermiquement isolante.

9. Fontaine selon l'une quelconque des revendications 1 à 8, **caractérisée en ce qu'**au moins ladite cuve (12) intérieure est réalisée en cuivre étamé, en aluminium ou encore en acier inoxydable.

10. Utilisation de ladite fontaine (10) selon l'une quelconque des revendications 1 à 9, pour le stockage et la distribution de confiture, gelée ou marmelade à une température supérieure à la température ambiante.

11. Utilisation de ladite fontaine (10) selon la revendication 10, **caractérisée en ce qu'**on maintient la température de ladite confiture, gelée ou marmelade à une température inférieure à 40°C, et encore mieux à 35°C, pour limiter la réaction de Maillard dans le produit alimentaire correspondant.

12. Utilisation selon la revendication 10 ou 11, **caractérisée en ce qu'**on maintient une température homogène, ou sensiblement homogène, de ladite confiture, gelée ou marmelade dans l'ensemble de la cuve intérieure de ladite fontaine.

13. Utilisation selon l'une quelconque des revendications 10 à 12, **caractérisée en ce que** la taille de chaque morceau de ladite confiture a été préalablement réduite pour éviter que ceux-ci se retrouvent par gravité dans le fond de ladite cuve (12) intérieure.

14. Utilisation selon l'une quelconque des revendications 10 à 13, **caractérisée en ce que** ladite confiture a été portée à une température d'ébullition pendant un temps T durant sa préparation, ledit temps T étant inférieur à un temps t de référence de sorte que la cuisson de ladite confiture est incomplète.

## Patentansprüche

1. Fontaine für ein viskoses oder pastöses Nahrungsmittel auf Zuckerbasis, **dadurch gekennzeichnet, dass** es umfasst
- einen Tank (11), umfassend eine Wand und einen inneren Behälter (12), der in dem Tank (11) angeordnet ist, wobei die Wand den inneren Behälter (12) umgibt, indem sie mit der Außenfläche des inneren Behälters (12) ein Zwischenraumvolumen (14) begrenzt, wobei der innere Behälter (12) dazu bestimmt ist, das Lebensmittelprodukt zu enthalten,
- wobei das Zwischenraumvolumen (14) dazu bestimmt ist, eine Flüssigkeit aufzunehmen, um die äußere Oberfläche des inneren Behälters (12) wenigstens teilweise zu umspülen,
- ein Heizmittel (15) zum Erwärmen der Flüssigkeit, die dazu bestimmt ist, in dem Zwischenraumvolumen (14) enthalten zu sein, wobei die so erwärmte Flüssigkeit es ermöglicht, den Inhalt des inneren Behälters (12) durch ein Wasserbad zu erwärmen,
- wobei der untere Teil des Tanks (11) eine Auslassöffnung aufweist, die nur mit dem Innenvolumen des inneren Behälters (12) in Fluidverbindung steht, und
- wobei die Fontäne derart ausgebildet ist, dass die Temperatur des Lebensmittelprodukts in dem inneren Behälter (12), wenn die Fontäne in Betrieb ist, weniger als 40°C und noch besser weniger als 35°C beträgt, um die Maillard-Reaktion in diesem Lebensmittelprodukt zu begrenzen, **dadurch gekennzeichnet, dass** der innere Behälter (12) eine Säule mit einem Durchmesser von kleiner gleich 12 cm und noch besser 10 cm ist, so dass die Temperatur des Lebensmittelprodukts in einem zentralen Bereich des inneren Behälters (12) und die Temperatur des Lebensmittelprodukts in einem peripheren Bereich des inneren Behälters (12) im Wesentlichen gleich sind.

2. Fontäne nach Anspruch 1, **dadurch gekennzeichnet, dass** die Auslassöffnung an der Seite des Tanks angeordnet ist.

3. Fontäne nach Anspruch 1 oder 2, **dadurch gekennzeichnet, dass** sie Mittel zum Steuern der Temperatur des Wasserbades umfasst, so dass die Temperatur des Inhalts des inneren Behälters (12) zwischen 20°C und 35°C liegt, wenn die Fontäne in Betrieb ist.

4. Fontäne nach einem der Ansprüche 1 bis 3, **dadurch gekennzeichnet, dass** die Auslassöffnung an der Seite des Tanks angeordnet ist, wobei der untere Teil des inneren Behälters (12) einen nach unten weisenden, zu der Auslassöffnung gerichteten Krümmer bildet, um den gesamten Inhalt des inneren Behälters (12) zur Auslassöffnung zu leiten.

5. Fontäne nach Anspruch 4, **dadurch gekennzeichnet, dass** der untere Teil des inneren Behälters eine glatte Wand ohne Grat aufweist, um ein leichteres Fließen des Lebensmittelprodukts zu der Auslassöffnung der Fontäne zu gewährleisten.

6. Fontäne nach einem der Ansprüche 1 bis 5, **dadurch gekennzeichnet, dass** eine Verteilerdüse (13) mit der Auslassöffnung in Fluidverbindung mit der Auslassöffnung verbunden ist, wobei die Düse mit einem Ventil versehen ist, das zwischen einer Öffnungsstellung und einer Schließstellung beweglich ist, wobei das Ventil durch ein Element zur Steuerung der Öffnung des Ventils betätigt werden kann.

7. Fontäne nach einem der Ansprüche 1 bis 6, **dadurch gekennzeichnet, dass** das Heizmittel (15) durch einen elektrischen Stromversorgungskreislauf versorgt wird.

8. Fontäne nach einem der Ansprüche 1 bis 7, **dadurch gekennzeichnet, dass** die Innenfläche der Wand des Tanks (11), die mit der Flüssigkeit in Kontakt treten soll, mit wenigstens einer Schicht aus wärmeisolierendem Material beschichtet ist.

9. Fontäne nach einem der Ansprüche 1 bis 8, **dadurch gekennzeichnet, dass** wenigstens der innere Behälter (12) aus verzinntem Kupfer, Aluminium oder rostfreiem Stahl hergestellt ist.

10. Verwendung der Fontäne (10) nach einem der Ansprüche 1 bis 9 für die Lagerung und Verteilung von Konfitüre, Gelee oder Marmelade bei einer höheren Temperatur als der Umgebungstemperatur.

11. Verwendung der Fontäne (10) nach Anspruch 10, **dadurch gekennzeichnet, dass** die Temperatur der Konfitüre, des Gelees oder der Marmelade bei einer Temperatur unter 40°C und noch besser unter 35°C gehalten wird, um die Maillard-Reaktion in dem entsprechenden Lebensmittelprodukt zu begrenzen.

12. Verwendung nach Anspruch 10 oder 11, **dadurch gekennzeichnet, dass** eine homogene oder im Wesentlichen homogene Temperatur der Konfitüre, des Gelees oder der Marmelade im gesamten inneren Behälter der Fontäne aufrechterhalten wird.

13. Verwendung nach einem der Ansprüche 10 bis 12, **dadurch gekennzeichnet, dass** die Größe jedes Stücks der Konfitüre vorher verringert wurde, um zu verhindern, dass sie durch die Schwerkraft auf den Boden des inneren Behälters (12) gelangen.

14. Verwendung nach einem der Ansprüche 10 bis 13, **dadurch gekennzeichnet, dass** die Konfitüre während ihrer Herstellung für eine Zeit T auf eine Siedetemperatur gebracht wurde, wobei die Zeit T kleiner als eine Referenzzeit t ist, so dass das Kochen der Konfitüre unvollständig ist.

## Claims

1. Fountain for sugar-based viscous or pasty food product, **characterised in that** it comprises
- a container (11) including a wall, and an internal tank (12) placed in said container (11), said wall surrounding said internal tank (12) by defining with the outer surface of said internal tank (12), a separating volume (14), said internal tank (12) being intended to contain said food product,
- said separating volume (14) being intended to receive a liquid to immerse at least partially, the outer surface of said internal tank (12),
- a heating means (15) for heating said liquid intended to be contained in said separating volume (14), said liquid thus heated making it possible to heat the contents of said internal tank (12) using a water-bath,
- the lower part of said container (11) including an outlet orifice fluidically connected to the only internal volume of said internal tank (12), and
- said fountain being configured such that the temperature of the food product in the internal tank (12), when the fountain is in operation, is less than 40°C, and preferably 35°C to limit the Maillard reaction in this food product, **characterised in that** said internal tank (12) is a column wherein the diameter is less than or equal to 12 cm, and preferably 10 cm, such that the temperature of the food product in a central zone of said internal tank (12) and the temperature of the food product at a peripheral zone of said internal tank (12) are substantially equal.

2. Fountain according to claim 1, **characterised in that** said outlet orifice is placed on the side of said container.

3. Fountain according to claim 1 or 2, **characterised in that** it includes means for controlling the temperature of the water-bath such that the temperature of the contents of said internal tank (12) is between 20°C and 35°C, when said fountain is in operation.

4. Fountain according to any one of claims 1 to 3, **characterised in that** said outlet orifice being placed on the side of the container, the lower part of said internal tank (12) forms a bend pointing downwards and directed towards said outlet orifice to guide all of the contents of said internal tank (12) towards said outlet orifice.

5. Fountain according to claim 4, **characterised in that** said lower part of the internal tank has a smooth wall without edges to ensure easier flow of the food product towards the outlet orifice of the fountain.

6. Fountain according to any one of claims 1 to 5, **characterised in that** a dispensing nozzle (13) is connected to said outlet orifice by being in fluidic connection with this orifice, said nozzle being equipped with a flap movable between an opening position and a closing position, said flap being capable of being actuated by an opening control member of said flap.

7. Fountain according to any one of claims 1 to 6, **characterised in that** said heating means (15) is powered by an electric current power supply circuit.

8. Fountain according to any one of claims 1 to 7, **characterised in that** the internal surface of the wall of said container (11) intended to be in contact with said liquid, is coated with at least one layer of thermally insulating material.

9. Fountain according to any one of claims 1 to 8, **characterised in that** at least said internal tank (12) is made of tin-plated copper, aluminium or stainless steel.

10. Use of said fountain (10) according to any one of claims 1 to 9, for storing and dispensing jam, jelly or marmalade at a temperature greater than ambient temperature.

11. Use of said fountain (10) according to claim 10, **characterised in that** the temperature of said jam, jelly or marmalade is maintained at a temperature less than 40°C, and preferably 35°C, to limit the Maillard reaction in the corresponding food product.

12. Use according to claim 10 or 11, **characterised in that** a homogeneous, or substantially homogeneous, temperature of said jam, jelly or marmalade is maintained throughout the internal tank of said fountain.

13. Use according to any one of claims 10 to 12, **characterised in that** the size of each piece of said jam has been previously reduced to prevent them from finding themselves by gravity at the bottom of said internal tank (12).

14. Use according to any one of claims 10 to 13, **characterised in that** said jam has been heated to a boiling point for a time T during the preparation thereof, said time T being less than a reference time t such that the cooking of said jam is incomplete.
